# EUROPEAN PATENT SPECIFICATION

(11) **EP 3 507 387 B1**
(45) Date of publication and mention of the grant of the patent: **26.01.2022**
(21) Application number: 17849935.6
(22) Date of filing: 19.09.2017
(51) Int. Cl.: C22B 3/04, C22B 3/06, C22B 15/00, C22B 60/02, C22B 11/00, C25C 1/12

(54) **INTEGRATED HYDROMETALLURGICAL AND PYROMETALLURGICAL METHOD FOR PROCESSING ORE**
INTEGRIERTES HYDROMETALLURGISCHES UND PYROMETALLURGISCHES VERFAHREN ZUR VERARBEITUNG VON ERZ
PROCÉDÉ HYDROMÉTALLURGIQUE ET PYROMÉTALLURGIQUE INTÉGRÉ DESTINÉ AU TRAITEMENT DE MINERAI

(30) Priority: 19.09.2016 AU 2016903763
(43) Date of publication of application: 10.07.2019
(73) Proprietor: BHP Olympic Dam Corporation Pty Ltd, Melbourne, Victoria 3000 (AU)
(72) Inventor: BOJCEVSKI, David, Henley Beach South, South Australia 5022 (AU); ENGLAND, John Kenneth, St Peters, South Australia 5069 (AU); RORKE, Gary Vernon, Christchurch 8014 (NZ)
(74) Representative: Jenkins, Peter David
(86) International application number: PCT/AU2017/051021
(87) International publication number: WO 2018/049487

(56) References cited:
- WO-A1-2011/116426
- WO-A1-2014/169325
- WO-A1-2014/169325
- WO-A2-2008/036985
- WO-A2-2016/025492
- AU-A1- 2008 201 799
- GB-A- 1 291 896
- US-A- 4 034 063
- DATABASE COMPENDEX [Online] ENGINEERING INFORMATION, INC., NEW YORK, NY, US; 5 August 1988 (1988-08-05), GRAD PAUL: "OLYMPIC DAM IS BEING COMMISSIONED.", XP002798442, Database accession no. EIX88120170019 & JOURNAL OF THE INSTITUTION OF ENGINEERS, AUSTRALIA 1988 AUG 5, vol. 60, no. 16, 5 August 1988 (1988-08-05), pages 42-43,

## Description

### TECHNICAL FIELD

The present disclosure relates to a method for processing ore. In particular, the present disclosure relates to an integrated method for processing copper and uranium containing ore which includes a heap leach process and a smelting process. The present disclosure also relates to a plant for conducting the integrated method.

### BACKGROUND ART

Mineral deposits in the Stuart shelf, Australia, generally contain three metal values, namely copper, uranium and precious metals (mainly gold and silver). The copper is principally in the form of sulphide minerals such as Chalcocite (Cu₂S), Bornite (Cu₅FeS₄) and Chalcopyrite (CuFeS₂). The uranium is principally in the form of such minerals as Uraninite, Coffinite and Brannerite. The common gangue minerals may include quartz, hematite, feldspar, sericite, fluorite, siderite, chlorite and pyrite.

If the copper, uranium and gold content in the ore body is sufficiently high to be economically recovered then the treatment of the ore is complex as historically each value mineral requires within reason a separate processing route. A typical process employed to treat this ore type may contain the following processing steps:

### 1. Milling and flotation:

The run of mine ore is milled and reports to a sulphide flotation plant, which recovers approximately 93% of the copper sulphides and 70% of the gold to a concentrate hereinafter referred to as "conventional concentrate". This conventional concentrate accounts for approximately 3% of the total ore mass.

### 2. Concentrate pre-treatment

The conventional concentrate is thickened and leached at elevated temperatures in a series of stirred tanks with sulphuric acid to solubilize fluoride and uranium as well to dissolve carbonates. The resultant thickener underflow is filtered. The thickener decant as well as filtrates report to a tails leaching facility. The filter cake is re-pulped, neutralized, re-filtered and dried in preparation for smelting.

### 3. Smelting and Anode production

The conventional concentrate is fed to a flash smelter along with oxygen and fluxing agents. The conventional concentrate separates into a blister copper and slag phase. The blister copper is fire refined in an anode furnace and then cast into anodes.

### 4. Electro refining and precious metal recovery

The cast copper anodes are electro refined onto blank cathode sheets. The cathodes are removed, stripped and sold. Gold and silver from the conventional concentrate report to the anodes and collect in the tankhouse as slimes. The slimes are treated with cyanide to recover gold and silver.

### 5. Flotation tails leaching and uranium recovery

The flotation tails contain the majority of the uranium. The flotation tails are thickened and leached at elevated temperatures in a series of stirred tanks with sulphuric acid and sodium chlorate to oxidise and solubilize uranium. The leached tails slurry undergoes counter current decantation. The decant is clarified and the clarified liquor, now called pregnant leach solution, reports to a copper solvent extraction facility (CuSX) to extract copper. The CuSX raffinate reports to a uranium solvent extraction facility where uranium is precipitated from solution as ammonium diuranate. The ammonium diuranate is calcined to form uranium oxide and packaged for sale.

The above type of process has a number of disadvantages when applied to this type of orebody:
- Robustness: the three major processing units 1, 3 and 5 are linked. Tails leaching (unit 5) and smelting (unit 3) require the mill and flotation (unit 1) to operate in order to provide feed. Also, the Tails leach (unit 5) requires smelting (unit 3) to operate for acid supply. In addition, the mill and flotation (unit 1) requires tails leach (unit 5) to operate as otherwise the flotation tails are too voluminous to store. In general, the short process retention times dictates that stoppage of one processing unit requires stoppages of all units within a short time period. This in turn may reduce overall plant availability and continuity.
- Lack of expandability. These types of processing units are limited by the size of unit operations such as the counter current decantation circuit. This means that using this technology to treat large tonnages requires multiple parallel processing plants.
- Tails leaching: Fluorite and feldspar dissolve in the tails leach tanks and respectively release calcium and potassium into solution. These ions re-precipitate as gypsum and jarosite scaling. The tails leach reactors each have a short individual retention time (~2hours) which is insufficient time for seed nucleation within the slurry. This results in the slurries remaining super saturated in potassium and calcium, meaning scale formation throughout the tails leach, CCD and solvent extraction facilities. This necessitates maintenance which can affect plant availability and efficiency. In addition, elevated chlorite concentrations in the ore can create spikes in the silica concentration which may polymerize into silica gel and bog the process. Furthermore, uranium dissolution during tails leaching is initially rapid but then has a very slow leaching tail. The vast majority of the uranium may be recovered using stirred reactors but this may not be cost effective.

In copending patent application No PCT/AU2014/000409, published as WO 2014/169325 A1, an alternative method for processing ore was proposed in which run of mine (ROM) ore was subjected to heap pre-leaching (HL) which produced a first pregnant leach solution (PLS) prior to subjecting the ripios to flotation to produce a copper concentrate and tailings.

The copper concentrate was then subjected to an oxidative acid leach to produce a second PLS and a leach residue. Most of the uranium and a significant proportion of copper could be be recovered from the first PLS. The residual copper was recovered from the second PLS. The leach residue was treated hydrometallurically to recover the precious metals.

While the process described in PCT/AU2014/000409 can be a cost-effective means of recovering uranium and some copper from crushed ROM ores, it can be problematical under some conditions. For example, the hydrometallurgical processing of the copper concentrate may lead to formation of elemental sulphur rather than sulphates, with attendant disadvantages to capital expenditure (capex) and operational expenditure (opex).

It would therefore be desirable to provide a method for processing ore that overcomes or at least alleviates one or more disadvantages of the prior art flowsheets. It would also be desirable to provide a method for processing ore which yielded higher total metal recoveries than the prior art flowsheets. It would be further desirable to provide a method for processing ore that utilised existing equipment used in the conventional process flowsheet. It would be further desirable to provide a method for processing ore that accomodated declining ore grade and/or variable mineralogy (eg increasing chalcopyrite leading to reducing Cu:S in the ore) over the life of the ore deposit and utilising sulphur present in the ore or process streams.

The above references to the background art do not constitute an admission that the art forms a part of the common general knowledge of a person of ordinary skill in the art. The above references are also not intended to limit the application of the processes and plant as disclosed herein.

### SUMMARY OF THE DISCLOSURE

The present applicant has undertaken further research and development work and has surprisingly found that pyrometallurgical processing of the copper concentrate is a far more cost effective and efficient way of recovering copper and precious metals as compared with the hydrometallurgical process of PCT/AU2014/000409.

According to the invention as defined in claim 1, there is provided a process for recovering copper, uranium and one or more precious metals from an ore material, including:
a. forming a heap of the ore material;
b. subjecting the heap of the ore material to an acidic heap leach using an iron containing acidic leach solution in the presence of an oxygen containing gas, and producing a pregnant leach solution and a ripios;
c. subjecting the ripios to flotation to produce a copper containing ripios concentrate and tailings;
d. subjecting the ripios concentrate to a smelting process to produce a smelted copper product;
e. recovering copper and uranium from the pregnant leach solution.

Particular embodiments of the invention are detailed in dependent claims 2 to 13.

The recovery of copper and uranium from the pregnant leach system is preferably effected by solvent extraction.

In one embodiment, the heap leaching of ROM ore in step (b) may increase the relative abundance in the ripios of sulphide minerals having a relatively high proportion of sulphur, such as chalcopyrite and pyrite. This is particularly likely in an ore deposit in which the ROM mineralogy changes over the life of the mine- such as where the ore grade decreases over time. In addition, the ripios may contain significant elemental sulphur (such as up to 2 wt%) which is formed as a by-product of the leaching process. This increase of relative abundance of sulphur in the ripios is also carried into the ripios concentrate after flotation. It has been found that the relatively high concentration of elemental sulphur (for example, between approximately 7 and 17 wt%) in the ripios concentrate may present a challenge for the drying and pyrometallurgical treatment of the ripios concentrate. This is due to a number of factors, particularly the self-heating characteristics of sulphur leading to drying, transport, storage and smelting safety concerns which could lead to equipment damage and production loss.

In the conventional pyrometallurgical treatment of the conventional concentrate, the smelting of the conventional concentrate is able to be conducted in a single stage. Specifically, the conventional concentrate has been smelted directly to blister in a "Direct to Blister" Furnace (DBF). The DBF may accept concentrates having a Cu: S ratio of approximately 1.4 or higher. However, the ripios concentrate contains a lower Cu:S ratio than the conventional concentrate, due partly to higher quantities of elemental sulphur arising from the heap leaching process, partly due to preferential leaching of higher Cu:S minerals during the heap leach process (such as chalcocite and bornite) leaving lower Cu:S minerals (such as chalcopyrite) in the ripios and partly to reducing ore grade and/or variable mineralogy over time. The Cu:S ratio of the ripios concentrate is typically less than 1.4. It may be less than 1.2, such as less than 1.1. The minimum Cu:S ratio may be approximately 0.5, such as a minimum of 0.8. As a result of the lower Cu:S ratio in the ripios concentrate, it is difficult to smelt the ripios concentrate in a single stage.

The smelting process may comprise two or more stages.

In a preferred embodiment, the multi-stage smelting process enables utilisation of a DBF in at least one stage. The process may therefore facilitate the continued use of existing smelting equipment (that requires concentrate feed having a relatively high Cu:S ratio) as the ore grade declines and/or the mineralogy changes over the life of a mine, thereby minimising capital expenditure (such as on a converter to process matte).

In the first stage, the ripios concentrate may be smelted to produce a matte copper product. The matte copper product may contain at least 40% copper, such as up to 75% copper. In an embodiment, the matte copper product may contain from 50 - 70% Cu. The ripios concentrate may be mixed with another material that is richer in copper than the ripios concentrate in order to increase the overall Cu:S ratio of the combined feed. The other material may be the conventional concentrate. The conventional concentrate may be added to the ripios concentrate in an amount of up to 50 wt% of the combined feed. In an embodiment, the conventional concentrate is added in an amount between 20 to 80wt%, such as from 30 to 70 wt%, or from 40 to 60 wt%, of the combined feed. The matte copper product may then be subjected to a second smelting stage. In the second smelting stage, the matte product is further refined and is preferably converted to blister copper. The blister copper may contain in excess of 90% Cu, such as at least 95% Cu.

The matte copper product may be combined with another feed material prior to being smelted in the second smelting stage. The matte copper product may be granulated prior to being combined with the other feed material. The other feed material may advantageously comprise conventional concentrate. In one embodiment, the other feed material may comprise ripios concentrate. Where the second smelting stage is conducted in a DBF, the mixture of copper matte and a conventional concentrate results in the overall Cu:S ratio of the feed being higher than that of the concentrate alone. Accordingly, where the concentrate has a relatively low Cu:S ratio, copper matte may be added in the desired amount to increase the overall Cu:S ratio of the feed to an optimum value. For example, the overall Cu:S ratio of the combined feed may be a minimum of 1.4.

Accordingly, the above multistage smelting process enables continued operation of an ore processing plant using existing smelting equipment that requires feed to have a relatively high threshold Cu:S, while minimising new capital expenditure on additional smelters, even if the Cu:S of the ore concentrate is less than the threshold ratio. The multistage process therefore accomodates changing concentrate composition over time, such as due to different ore concentrating methods, or due to the inevitable decline in ore grade and/or change in mineralogy over time.

The blister copper may then be fire refined to produce anode copper prior to being electro-refined to produce cathode copper. Typically, any precious metals present in the blister copper are precipitated in the anode slimes during the electro-refining process and subsequently recovered.

In one embodiment of the process, the ore material contains copper sulphides and uranium minerals. The ore material may also contain one or more precious metals. The precious metal may be gold and/or silver. The ore material may also contain one or more iron containing minerals. The iron containing minerals may include gangue minerals, such as one or more of hematite, siderite and chlorite. These minerals may partly or wholly comprise the source of the iron in the iron containing acidic leach solution.

The ripios produced in step (b) may primarily contain one or more of copper sulphides, precious metals, pyrite, elemental sulphur, hematite and silica. It may also contain one or more of naturally occurring radionuclides, rare earth elements and gangue materials. In some embodiments calcium fluoride may also be present and may require removal through leaching or additional flotation cleaning.

Prior to flotation in step (c), the ripios may undergo milling. The particle size of the milled ripios may comprise a P80 of approximately 75µm, preferably approximately 35 µm, however may range from 20µm to -150µm. The ripios copper concentrate may undergo further regrinding during flotation and may comprise a P80 of approximately 20µm, however may range from 15µm to 75µm. Copper concentrate grade may be around 25wt% Cu, however may range from 15wt% to 45wt%.

In one embodiment of the heap leach ore process, the oxygen containing gas is air. In another embodiment, the oxygen containing gas is oxygen-enriched air.

In one embodiment of the process, the pregnant leach solution contains at least uranium. It may comprise a substantial proportion of uranium in the ore. It may also contain at least some copper.

In one embodiment of the process, the iron containing acidic leach solution contains ferric ions which oxidise the ore material to dissolve copper and uranium, resulting in reduction to ferrous ions. The ferrous ions are then reoxidised to ferric ions by reaction with the oxygen containing gas.

The pregnant leach solution produced in step (b) may be subsequently subjected to an extraction step to recover uranium and any copper. The extraction step may comprise a solvent extraction stage. The solvent extraction stage may comprise two solvent extraction processes, one to extract uranium and the other to extract any copper from the pregnant leach solution. The extraction step may comprise a first solvent extraction process to recover any copper from the pregnant leach solution/s, and the raffinate from the first solvent extraction process is then treated in a second solvent extraction process to extract uranium. The raffinate from the second solvent extraction process may be at least partly recycled for use in the heap leach step (b) and/or at least partly purged in order to control the build up of deleterious species and/or to maintain a balance of solution inventory (eg chloride and/or excessive iron) in solution.

In an embodiment the extraction step may include an ion exchange process to extract uranium from the raffinate from the first solvent extraction process.

The acidic heap leach in step (b) may be conducted in more than one stage. In one embodiment, the acidic heap leach is conducted in two stages. In another embodiment, the acidic heap leach is conducted in more than two stages, such as in three stages. Where more than one heap leach stage is employed, the ore being leached in a subsequent stage may comprise partially leached ore from a previous stage. Moreover, the first heap leach stage may result in an intermediate leachate which may at least partially comprise the leachant for the second heap leach stage. The leachate from the second heap leach stage may at least partially comprise the leachant for a third heap leach stage (if used) and so on.

The leachate from at least the second heap leach stage may comprise the pregnant leach solution.

A portion of the pregnant leach solution may pass to the extraction step and a portion may be recycled. This is done to minimise the volume of the pregnant leach solution required to be processed in the extraction step and to therefore control the size of extraction equipment.

The ripios produced in step (b) may be rinsed with water or recycled process water, such as from the flotation step, prior to step (c). Rinsing removes acid and soluble metals. The rinse water may then be used as a diluent such as in the heap leach step (b) (eg in the final heap leach stage). The use of rinse water as a diluent for the heap leach step assists to optimise the water conservation of the metal recovery process.

The ripios produced in step (b) is preferably milled prior to the flotation step (c), in order to maximise separation of ore minerals from gangue.

The heap leach of step (a) may be conducted at atmospheric pressure and at a temperature from ambient to elevated. In an embodiment, the temperature may be ambient, such as up to 35 ° C.

The heap leach of step (a) may be conducted for a period of time exceeding 100 days, such as from 150 to 300 days.

In one embodiment, the smelting process includes at least two smelting stages and the ripios concentrate has a Cu:S below 1.4 the process including:
(a) smelting the ripios concentrate in a first stage comprising a matte smelter to produce a matte copper product containing at least 40% copper;
(b) combining the matte copper product with a copper concentrate to produce a feed material having a ratio of Cu:S that is higher than that of the ripios concentrate; and
(c) smelting the feed material in a second stage comprising a direct to blister furnace to produce blister copper having at least 95% copper.

The smelting step (a) may be conducted in a flash smelter. Alternatively, the smelting step (a) may be conducted in a bath smelter. Preferably, smelting step (a) is conducted in a flash smelter.

The ripios concentrate may be mixed with another material that has a higher Cu:S ratio than the ripios concentrate in order to increase the overall Cu:S ratio of the combined feed to step (a). The other material may be a copper concentrate having a Cu:S ratio greater than 1.4. The combined feed may have an overall elemental sulphur content of 4-8%.

The matte copper product produced in step (a) may also be combined with a copper concentrate prior to being smelted in the second smelting stage (b). The matte copper product may be granulated prior to being combined with the Cu concentrate. The copper concentrate may advantageously also comprise the copper concentrate having a Cu:S ratio greater than 1.4.

The second smelting stage (b) may be conducted in a DBF. The mixture of copper matte and a copper concentrate results in the overall Cu:S ratio of the feed being higher than that of the concentrate alone. Accordingly, where the concentrate has a relatively low Cu:S ratio, copper matte may be added in the desired amount to increase the overall Cu:S ratio of the feed to an optimum value. For example, the overall Cu:S ratio of the combined feed may be a minimum of 1.4.

The blister copper produced in the second smelting step (b) may have 98-99% Cu.

The invention as defined in claim 14 further provides an integrated plant for use in the process for recovering copper, uranium and one or more precious metals from an ore material as defined in the invention according to claim 1, said plant including:
means for forming a heap of the ore material;
means for supplying an acidic leach solution and an oxygen containing gas to the heap to form a pregnant leach solution and a ripios;
extraction equipment for extracting copper and uranium from the pregnant leach solution;
means for collecting and transferring the pregnant leach solution arising from the heap leach to the extraction equipment;
flotation equipment for use in flotation of the ripios to produce a copper containing ripios concentrate and means to transfer the ripios from the heap to the flotation equipment; and
first and second furnaces for smelting the ripios concentrate to produce a smelted copper product and means to transfer the ripios concentrate to the first furnace.

Particular embodiments of the invention according to claim 14 are detailed in dependent claims 15 and 16.

Each hydrometallurgical aspect of the process for recovering copper and uranium may be conducted using saline water (such as sea water or saline ground water) for the process solutions, as opposed to fresh water. This may be beneficial in regions with water scarcity, or where water conservation is important. In addition, the presence of chloride ions in the process solutions may improve the leach rates of ore minerals, such as chalcopyrite. In particular, the heap leach process step (b) may be conducted using saline and/or hypersaline process solutions, and may be conducted in accordance with copending patent application number PCT/AU2015/050806, published as WO 2016/094956.

After the flotation step, and prior to the smelting step, the ripios concentrate may be subjected to an optional concentrate leach step to at least partially remove fluorides in the ripios concentrate prior to smelting. The fluoride leach step may be conducted using sulphuric acid at elevated temperature (such as 70-80 °C). Alternatively, aluminium ions may be used to complex and partially remove fluorides to acceptable levels for smelting. The aluminium concentrate leach process includes aluminium ion addition. (III). The ratio of aluminium to fluoride (A1:F ratio) may range from 0.5 - 1.5, such as around 1.0. The pH of the fluoride leach may range from 0.5 to 2.5, such as from 1-1.5. The leach temperature may range from 40-70 °C such as around 50 °C. The fluoride leach may be conducted for a period of time from 1-12 hours, such as from -6-10 hours. It has been found that the fluoride leach may also provide some additional benefits including some upgrading of the ripios concentrate by as much as 2-6%. The fluoride leach may also remove some uranium reporting to the ripios concentrate (for example, 1-3 % uranium extraction with respect to run-of-mine ore).

After the flotation step (and any subsequent fluoride leach step), and prior to the smelting step, the concentrate may also be subjected to a dewatering step. The dewatered concentrate may have a water content no higher than 15%, and preferably less than 12 wt%. The dewatered concentrate may comprise a minimum water content of 6 wt%, such as around 10wt%. The dewatered concentrate may be conveniently dried using a steam dryer or a flash dryer.

### BRIEF DESCRIPTION OF THE DRAWINGS

In the following, specific embodiments will be described, by way of example only, with reference to the accompanying drawings in which:
Figure 1 shows a flowsheet for a process for recovering copper, uranium and one or more precious metals from an ore material;
Figure 2 shows a flowsheet for a process for smelting copper
Figure 3 is a graph of the average Cu and U extraction (%) versus leach time (days) for a range of ore mineralogies during the heap leach stage of the disclosed recovery process.
Figure 4 is a bar graph showing the total copper recovery using a combination of heap leaching and flotation and smelting.
Figures 5 (a) and (b) plot copper and gold recovery, respectively, from feed ore and floated ore.
Figure 6 is a plot of copper recovery from ripios concentrate floated in seawater as compared with ripios floated using tap water.

### DETAILED DESCRIPTION OF SPECIFIC EMBODIMENTS

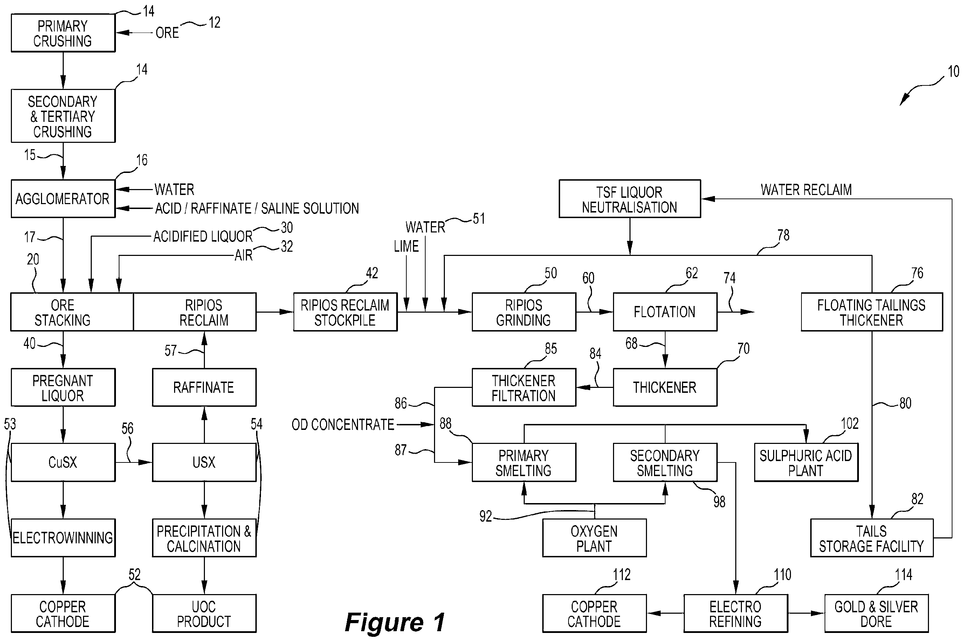

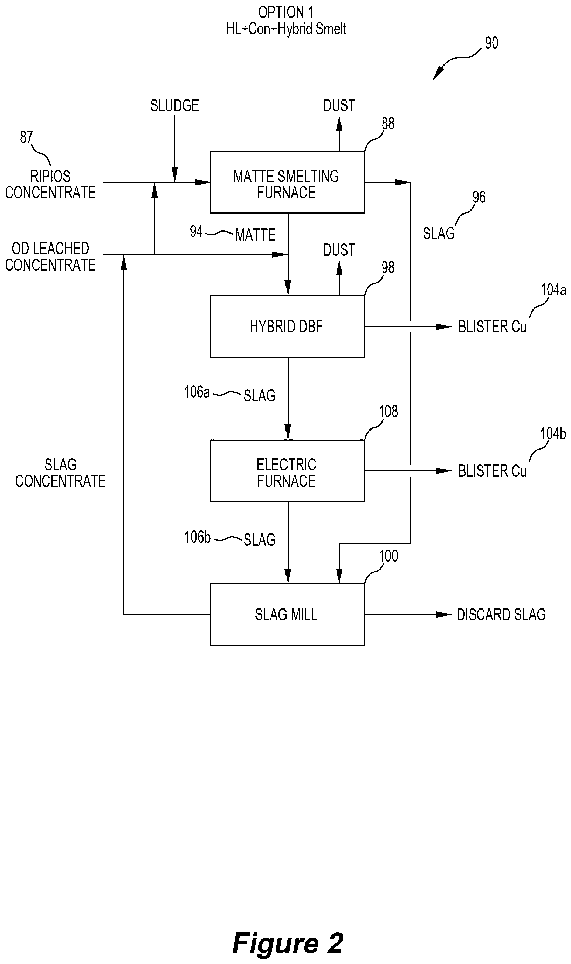

In each of Figures 1 and 2, like reference numerals are used to denote similar or like parts.

Referring firstly to Figure 1, shown is a flowsheet 10 illustrating a process for recovering copper, uranium and one or more precious metals from an ore material.

As-mined ore 12, comprising copper sulphides, uranium minerals and gangue minerals (siderite, hematite and chlorite), is delivered to an ore stock pile, then subjected to a crushing step 14. The crushing step 14 may comprise one or more stages of crushing, such as up to three stages of crushing: primary, secondary and tertiary.

The crushed ore 15 reports to an agglomeration step 16, where it is contacted with water and raffinate and/or acid and/or a solution containing saline conditions in a drum to bind the fine particles of ore to the larger lumps.

The agglomerated ore 17 reports to a heap leach step 20. The ore is stacked in one or more heaps to a height of approximately 6 to 10m by a stacker (not shown), such as a moving bridge stacker. The ore is stacked on a lined re-usable pad (not shown) that has a drainage layer, drain pipes and aeration pipes, and is irrigated through a dripper system (also not shown) with acidified liquor 30. The heap/s are supplied with air 32 blown into the heap. The stacked ore may be cured for a period of up to 30 days or more prior to the commencement of acid leaching.

During the heap leach step 20, the gangue minerals siderite and chlorite are leached with the acidic liquor 30 and they release ferrous iron into solution. This ferrous iron converts to ferric iron in the presence of the oxygen supplied by the air blown into the heap. The gangue mineral hematite also dissolves and releases ferric iron into solution. The ferric ions leach the copper sulphide minerals, (eg, chalcopyrite, bornite and chalcocite) liberating copper and more ferrous iron. The liquor is recirculated and the ferrous iron is re-oxidised to ferric ion by oxygen from the air. The ferric iron and acid also leach uranium into solution from the uranium minerals in the ore. The heap leach step 20 produces a first pregnant leach solution 40 containing dissolved copper and uranium and a ripios 42.

The pregnant leach solution 40 reports to an extraction step 52 in which copper and uranium are extracted from solution. The extraction step 52 reclaims copper and uranium that are dissolved during the heap leaching step 20.

Copper is extracted using a copper solvent extraction/ electrowinning (CuSXEW) stage 53. In the CuSXEW stage 53, the pregnant leach solution 40 is contacted in a counter current flow with an organic phase that loads copper to produce a loaded organic and a copper depleted aqueous stream (the copper SX raffinate, 56). The loaded organic is scrubbed and then the copper is stripped off by a strong acid liquor (eg, spent electrolyte). The loaded strip liquor reports to an electro-winning facility where the aqueous copper is plated on to blank cathode plates. The copper is stripped from the plates and sold. The spent electrolyte and the organic phase are both recycled.

The copper raffinate 56 reports to a uranium solvent extraction and refining facility 54. This is mostly analogous to the CuSXEW stage 53, with the exception that stripping is carried out by aqueous ammonia and the uranium is precipitated from solution as ammonium diuranate. The ammonium diuranate is calcined to form uranium oxide as the final product. The raffinate 57 from the uranium solvent extraction stage is recycled back to the heap 20.

The ripios 42 produced from the heap leach 20 reports to a milling step 50. In this step, the ripios is milled in either a ball or pebble mill. Make up water 51 and lime may be added if required.

The milled ripios 60 reports to a flotation step 62 which recovers approximately 93 - 95% of the copper sulphides and 70 - 73% of the precious metals to the ripios concentrate 68. This ripios concentrate 68 accounts for approximately 1-2% of the total ore mass. The ripios concentrate 68 is thickened in concentrate thickening step 70 to about 40% - 50% solids. Excess water 72 is returned to the milling step 50.

The flotation tailings 74 are thickened to about 68-70% solids in the flotation tails thickening step 76. The decanted water 78 from the flotation tailings thickening step 76 is returned to the milling step 50. The underflow 80 from the flotation tails thickening step 76 reports to the tails storage facility 82.

The thickened ripios concentrate 84 resulting from thickening step 70 primarily contains copper sulphides, pyrite, elemental sulphur, hematite and silica. It may also contain naturally occurring radionuclides, rare earth elements and gangue materials. In some instances calcium fluoride is present and may require removal through leaching or additional flotation cleaning. The particle size is typically a P80 of 35µm, however may range from 20µm to 105µm. The copper concentrate grade is typically around 25wt% Cu, however may range from 15wt% to 45wt%.

The solids density of the ripios concentrate slurry may be increased from approximately 25wt% up to 60wt % (range 45wt% to 65wt%) in the thickening step 70. The thickener underflow is dewatered using a pressure filter 85 to produce a filter cake having a moisture content preferably less than 15%, and may be in the range of 6wt% to 12wt%, such as approximately 10wt%. Filter cake squeezing and air purging may be used to ensure low moisture content. In the event of the primary smelting furnace being shutdown, the thickener underflow may be pumped to a concentrate storage pond (not shown) from which the ripios concentrate may be reclaimed and processed by the thickeners when required.

The filter cake 86 from the filter 85 may be conveyed to a shuttle conveyor (not shown) which distributes the filter cake 86 as ripios concentrate feed into concentrate surge bins (also not shown). These bins may be padded with inert gas (typically nitrogen) to minimise oxidation and self-heating of the ripios concentrate feed.

The ripios concentrate feed is supplemented with a proportion of the conventional concentrate from the pre existing ore processing plant.

The ripios concentrate feed and conventional concentrate are metered from the concentrate bins onto a collection conveyor which feeds the wet blended concentrate to a drying stage.

The drying stage may comprise using a rotary steam dryer. The rotary steam dryer may use steam produced in the subsequent smelter stage or acid plant boilers (described below). The steam pressure may be lowered to less than 10 Bar, potentially as low as 7 Bar to reduce the temperature and corresponding risks of overheating the elemental sulphur in the concentrate. The dryer may have an inert gas purge, to minimise the oxygen content. The preferred inert gas is nitrogen.

An alternative to the rotary steam dryer is to use a flash dryer where a fossil fuel is burnt and the combustion off-gas is used to convey and dry the concentrate over a short period of time. The dried concentrate from either drying option preferably will have a moisture content less than 0.5% and typically around 0.2%.

Dust from the dryer may be collected. This may be done in a cyclone, baghouse or particulate scrubber. The preferred configuration has the rotary steam dryer with a baghouse. Baghouse insulation may be installed to reduce elemental sulphur deposition as offgas streams cool.

The dried concentrate feed 87 may be then pneumatically transferred to concentrate storage silos (not shown) to provide additional residence time. The pneumatic transfer may be completed with nitrogen to minimise the risks of self-heating the concentrate. The dried concentrate feed 87 is then pneumatically conveyed, again with nitrogen, to a dry concentrate day bin prior to being introduced into the primary matte smelter 88. The smelter 88 could be a bath type or flash type of smelter, with the flash smelter as the preference. If the primary matte smelter 88 is a flash smelter, the blended concentrate should be dried to <0.5% moisture prior to flash smelting. However, if self-heating of the blended concentrate causes issues during drying and the concentrate can not be dried to <0.5%, then bath smelting may instead be used in the first smelting step (a). Should a bath type of smelter be installed, the dryer would potentially be replaced with an agglomerator and the moist feed would be transferred with conveying.

Silica flux may be transferred to a flux day bin and conveyor system (not shown) which feeds the flux to the primary matte smelter 88.

A portion of sulphated dust produced in the waste heat boiler or electro-static precipitator of the smelter 88 may be recycled back into the primary matte smelter 88. The existing feed preparation circuit will process the remaining conventional concentrate. The concentrate will be processed through the existing thickener, filters and steam coil concentrate dryers to produce dry high grade concentrate. The dry concentrate is pneumatically conveyed to concentrate silos.

With reference to Figure 2, there is shown a flowsheet 90 for smelting of the dried concentrate feed 87. The primary matte smelter 88 comprises a flash smelter.

In the flowsheet shown in Figure 2, the dried concentrate feed 87 is distributed evenly to the concentrate burner in the primary matte smelter 88 in order to achieve uniform distribution of dry charge to the reaction shaft. Oxygen enriched air 92 (typically 80 vol% oxygen, ranging from 50% to 90%) is blown through the concentrate burner as process air. Distribution air is blown horizontally through the concentrate burner tip to evenly distribute the charge.

The primary matte smelter 88 produces copper matte 94 (typically containing 70 wt% Cu, range 60% to 75%), iron silicate slag 96 (with typical Fe:SiO₂ ratio of 1.2 and 2 wt% Cu) and sulphur dioxide bearing off-gas.

Matte is tapped periodically from the primary matte smelter 88 and laundered a short distance from the smelter directly into the matte granulation system.

For the alternative in which the primary matte smelter 88 consists of a bath smelter, the blended flux, concentrate and dust is fed into the primary matte smelter 88 via a conveyor. Enriched oxygen is introduced below the molten metal bath through a lance which mixes and oxidised the materials to produce a copper matte, iron silicate slag and sulphur dioxide bearing off-gas. The matte and the slag from the primary matte smelter 88 will be tapped together and separated in a rotary holding furnace before matte granulation.

In both cases additional heat can be supplied to the primary matte smelter 88 through the introduction of heavy fuel oil or liquid petroleum gas (LPG) via burners. The overall heat balance may also be controlled through adjusting the oxygen enrichment of the air entering the furnace.

Slag 96, typically containing 2 wt% Cu (ranging from 0.5% to 8%, typically from 1% to 6%, such as from 1% to 5%) is tapped from the primary matte smelter 88 (typically the uptake shaft end of the flash smelter settler (or bath smelter rotary holding furnace) and sent to the slag concentrator 100 for further copper recovery.

Off-gas from the primary matte smelter 88 is directed to the primary smelter waste heat boiler to generate saturated steam (eg, at 70 bar). Should the steam production be excess to requirements, it may be treated in an air cooled condenser or a steam turbine and generate electricity from the excess steam to be fed back into the grid.

Off-gas exiting the primary smelter waste heat boiler may be sent to an electrostatic precipitator then to wet gas cleaning. The wet gas cleaning system includes a quench tower, radial flow scrubber, gas cooling tower and wet electrostatic precipitators. This gas stream then enters an acid plant 102 where the SO₂ in the gas is converted to sulphuric acid.

The dust collected from the primary smelter waste heat boiler and electrostatic precipitator may contain high levels of some radionuclides and can either be recycled to the primary matte smelter 88 or bled to a dust dissolving tank. The copper solution from dust leach may be recycled to either the heap leach CuSX/EW 52 or existing tails leach CuSX/EW facilities.

The granulated matte 94 is processed through a mill which grinds and dries the matte. The dry ground matte and dry conventional concentrate together with silica or lime flux are subsequently fed into the secondary smelter 98 comprising a Direct to Blister Hybrid Furnace (DBF). The DBF furnace would conventionally only treat concentrate. However, in the present process, the converting of the matte to blister and the treatment of the concentrate direct to blister in the same furnace at the same time enables it to be viewed as a "hybrid" DBF application (treatment of both matte and concentrate products). The simultaneous treatment of matte and concentrate together in a single DBF furnace avoids the need for a converting furnace to treat the matte alone.

The secondary smelter 98 produces blister copper 104a, slag 106 and sulphur dioxide bearing off-gas. The blister copper from the DBF Hybrid will be tapped and laundered to anode furnaces.

The slag 106a from the secondary smelter 98 is batch-tapped to an electric furnace 108 to recover copper via reduction of copper oxide using coke. The typical target electric furnace slag copper content is 4%, but may range from 2% to 8%.

Blister copper 104b from the electric furnace 108 is laundered to the existing anode furnaces. Electric furnace slag 106b is sent to the slag concentrator 100 for copper recovery.

The blister copper 104a, 104b from the secondary smelter 98 and the electric furnace 108 will enter an anode furnace (not shown). Plant air is injected through tuyeres into the molten bath of the Anode Furnace to oxidise the sulphur in the blister copper 104a, 104b. Following oxidation, a reduction cycle is completed by injecting LPG/Nitrogen into the tuyeres to control the oxygen content of the blister copper. Slag from the anode furnaces can be skimmed and recycled to recovery the copper.

Anode copper is cast into anodes in a casting wheel. The anodes are sent to an electro-refinery 110 for production of cathode copper 112. The copper anodes are loaded into cells filled with an electrolyte solution of sulphuric acid & copper sulphate. Next to each copper anode is a stainless steel cathode. A direct current of up to 31,000 amps is passed through the electrolyte solution, from the anode to the mother plate. The copper in the anode dissolves and redeposits as 99.99% pure copper on the stainless steel mother plate.

After a period of time (typically around 10 days) the copper is stripped from the cathode plates and bundled for shipment. Once a portion of the copper anodes have been dissolved (typically about 16% of their original weight), the remnant scrap is removed, washed & remelted.

Anode slimes that are generated by insoluble impurities in the copper anodes fall to the bottom of the cell. These slimes are further collected, treated and pumped to a gold room to extract gold & silver 114.

The slimes are first leached to remove the copper through leaching in aerated strong acid. This stage also removes some selenium and tellurium. The de-copperised slimes are neutralised to a pH of 8 or greater before being transferred to cyanidation tanks where cyanide is added at a pre-determined ratio and oxygen is injected. The gold and silver are dissolved in the cyanide solution, leaving behind insoluble impurities. The solution is filtered and pumped to the pregnant liquor storage tank. The residue is repulped with barren solution and ferrous sulphate to stabilise remaining cyanide before being pumped to the tails circuit.

The pregnant solution is pumped to a zinc precipitation tank where the gold and silver are precipitated out of solution. The precipitate is then filtered in a pressure filter and washed and re-pulped in potable water. The cake then undergoes a further leach step, where the zinc is leached in sulphuric acid. This also leaches the selenium through oxidation with nitric acid and/or hydrogen peroxide.

Water and salt are then added to the solution to leach silver which is further precipitated as a silver chloride. The silver chloride and gold metal are then filtered and collected.

The solids are repulped in a small amount of potable water to maintain a paste consistency. The material is fed into a conveyor dryer to remove the majority of the moisture before it reaches the roaster.

Sodium carbonate, silica flux and borax are added to the roaster are added to convert the silver chloride to silver metal and to remove any lead that is present in the precipitate. The molten material from the roaster is poured into Dore buttons and slag trays. The Dore is fed into the Dore furnace. The Dore furnace will remove the remaining lead, including Pb210 and selenium through oxidation and volatilisation. The Dore is then poured into moulds which cast the metal into anodes.

The Dore anodes are subjected to electrolysis in order to remove any impurities. 99.9% silver is produced at the electrolysis cathode and the gold within the anodes reports as mud. The mud is directed to the gold cage for further processing and the silver is centrifuged, weighed and cast into silver ingots.

The gold mud is dried and reagents and fluxes are added. The gold is then smelted into electrolysis anodes where they are placed into an electrolysis cell and current is applied. A resultant gold cathode is produced, stripped, washed and dried. The gold cathode is then melted and cast into gold bullion.

Advantages of the disclosed process and plant are:
- The use of a multi-stage smelting operation on the copper concentrate is an efficient and economical means of recovering copper from a concentrate having a relatively low Cu:S ratio. In particular, the use of a first smelting stage to produce copper matte from low Cu:S concentrate feed, followed by a second stage in which the matte and concentrate are smelted in a DBF furnace provides a more efficient and economical means of recovering copper when compared to hydrometallurgical processing of the ripios concentrate. The process therefore allows utilisation of existing equipment on-site to smelt ore concentrates despite changing concentrate composition over the life of the mine, which enables significant cost advantage.
- Robustness: The response times of the heap leach step are very long. This means that the heap leach and mill/flotation steps can be decoupled. The copper concentrate arising from flotation is a relatively small flow and can be given a reasonable storage time and hence a reasonable surge capacity between the steps/equipment is possible. There are no other dependencies.
- Gypsum and jarosite: The formation of gypsum and jarosite seed crystal during the curing step promotes the formation of these precipitates within the heap and not in the pipe work used during subsequent processing. This reduces the maintenance requirements.
- Plant size: Heap leach operations are readily expandable up to very large tonnages and are suited to large scale large open pit mining operations.
- Uranium recovery: Testwork has suggested that employing a heap leach step may improve the uranium dissolution of ore samples Extraction step: the Copper SX/EW can receive a clean low TSS (total soluble salts) feed, low acid and copper tenors that result in efficient recovery of copper. The uranium extraction stage may still get CRUD formation from zirconium and bismuth, but data to date suggest that the concentrations of zirconium and bismuth are significantly reduced
- Improved economics: The combination of minimal losses of soluble uranium and extended leach time enabled by the low cost heap leach results in higher uranium production. The combination of high copper recoveries from solution coupled with equivalent flotation performance on the ripios as is achieved on the ore also results in greater over all copper recoveries. Heap leaching provides a lower capital and less aggressive leaching environment. The latter leads to lower operating costs. The combination of the all the above generates a greater return on investment.

It has been found that in the disclosed method the rate of oxidation of ferrous iron is proportional to the square of the ferrous ion concentration. The disclosed process and plant are particularly efficient for the Olympic Dam ore body because the combination of gangue and value minerals in this ore body creates elevated iron tenors which allow this process to operate at an efficient rate.

### Example

### Heap Leaching and Flotation of Ripios

Ore samples, having a diverse range of mineralogy that reflected the actual range of ore mineralogy at Olympic Dam, were subjected to heap leaching (ie, step (a) of the disclosed process) in columns using an iron containing, acidic saline leaching solution in the presence of air. The Cu:S ratios of the ore samples ranged from approximately 3 to less than 1.. The ore contained a number of iron containing minerals, such as siderite and chlorite, which provided a source of ferric in the leaching solution. The acid consumption of the samples also varied from high to low, reflecting the variation in gangue mineralogy. The U₃O₈ grade of the ore was variable ranging from approximately 200ppm to 1,000ppm.

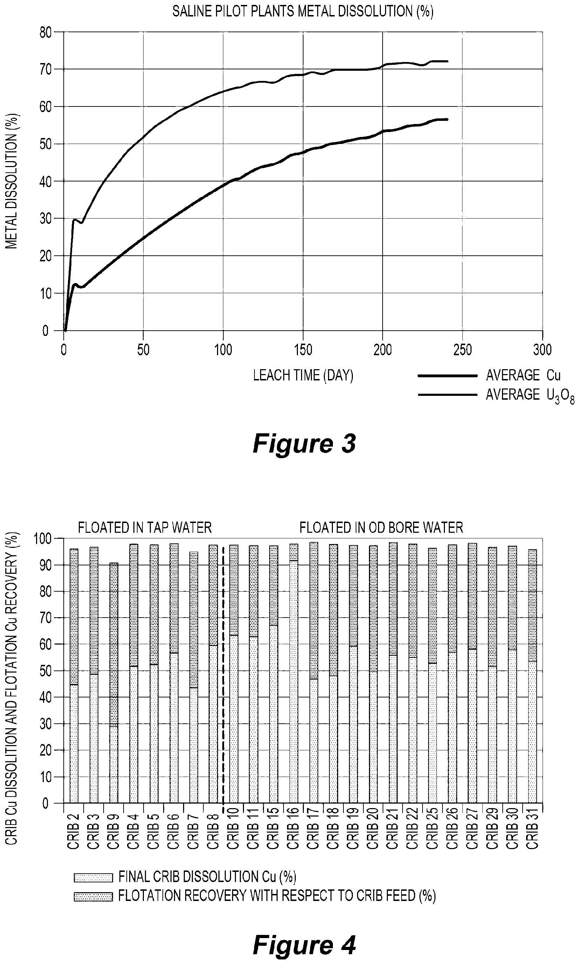

The dissolution of copper and uranium was measured over time. Figure 3 shows the results of these tests. The average dissolution (%) of U₃O₈ and Cu are plotted against time (days). The actual Cu and U extraction values ranged from 20% to 80% and from 30% to 90%, respectively, after 250 days of leaching. It can be seen that after approximately 250 days, the average dissolution of uranium was approximately 72% and of copper was 57%.

The ripios resulting from the above Heap Leach stage was ground to a particle size between 150 and 50 microns and subjected to flotation. Flotation resulted in good copper and precious metal recoveries in the float fraction of the ripios of approximately greater than 90% such as 93% and greater than 65%, such as 73% respectively.

Figure 4 is a bar graph showing the total copper recovery from a series of larger scaled "crib" heap leach and ripios flotation pilot plant tests. Each bar represents the total copper recovery from an ore sample using a combination of heap leaching and flotation of the ripios after heap leaching. The lower, lighter section of each bar represents the % copper dissolution from heap leaching the sample in a crib assembly. The upper, darker section of each bar represents the amount of copper in the ripios float fraction (ie recovered from the heap leach ripios after ripios flotation). (The float fraction would then become the feed to the potential downstream concentrate impurity leach and subsequent smelting process). Cribs 2 to 9 were floated using non-saline water (nominated as less than 5gpl chlorides), whereas cribs 10 to 31 were floated using saline water at 10-35 gpl chlorides, but typically 15-25 gpl chlorides. As can be seen, despite variation in the amount of copper dissolved from ore samples during heap leach (ranging from about 29% to 92%), there was a high recovery of the remaining copper in the sample using flotation, resulting in an overall copper recovery of at least 90%.

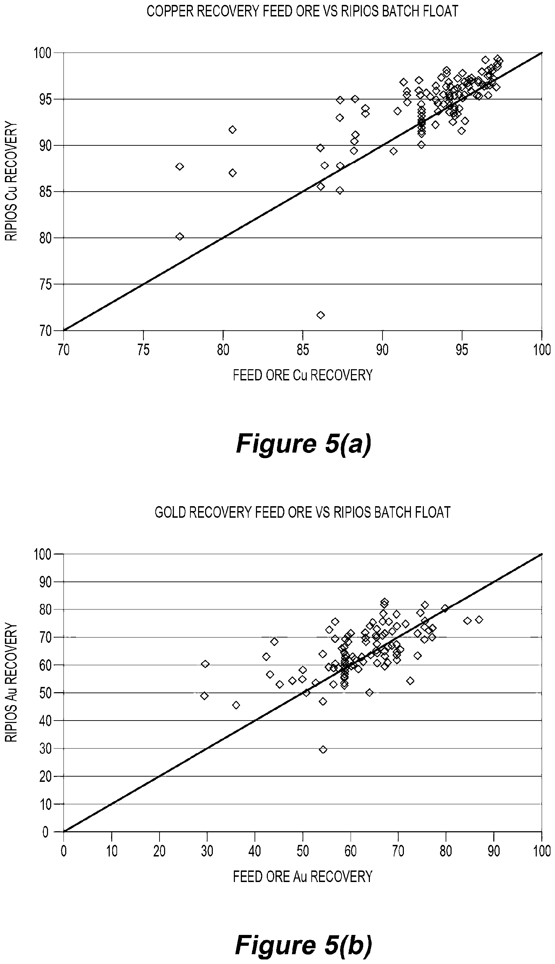

Figures 5 (a) and (b) plot copper and gold recovery, respectively, from feed (run of mine (ROM)) ore and floated ore. Each data point compares the % recovery from floated ore as compared with the % recovery from the ROM ore. Copper is partially leached during the heap leach whereas minimal or no gold is leached. The plots are approximately linear, indicating that metal recovery from the floated ore is similar to that from ROM ore. Given that flotation of aged or weathered ore is typically impeded due to the presence of oxidised or coated surfaces, it would be expected that flotation of ripios would also be impeded due to the conditions experienced during heap leaching. The results displayed by both Figures 5(a) and (b) were therefore surprising in that metal recovery from ripios was unexpectedly similar to that from the ROM.

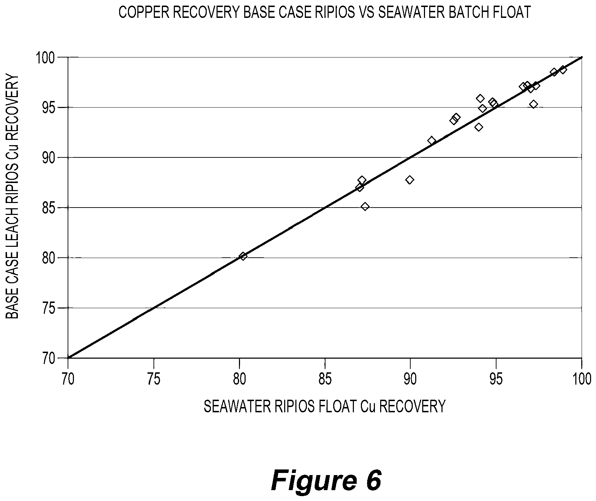

Figure 6 is a plot of copper recovery from ripios concentrate floated in saline seawater as compared with recovery from ripios floated using non-saline (tap) water. The plot is approximately linear, indicating that flotation may be as successfully conducted using saline water as using non-saline water.

### Smelting of Ripios Concentrate

Table 1 shows an example of the mineralogical and chemical compositions of a conventional concentrate and of a ripios concentrate produced using the process of the present disclosure. As noted previously, the conventional concentrate was produced from flotation of run of mine ore. In contrast, the ripios concentrate was produced from flotation of the ripios remaining after heap leaching the ore in accordance with the present disclosure. The ripios concentrate tends to have lower amounts of secondary sulphides (such as Cu₅FeS₂, Cu₂S, CuS) and a higher amount of chalcopyrite. It also includes elemental sulphur. Consequently, the ripios concentrate has lower overall copper and higher overall sulphur contents than the conventional concentrate. This translates into the ripios concentrate having a lower Cu:S ratio (0.83) than that of the conventional concentrate (1.66) in this test.

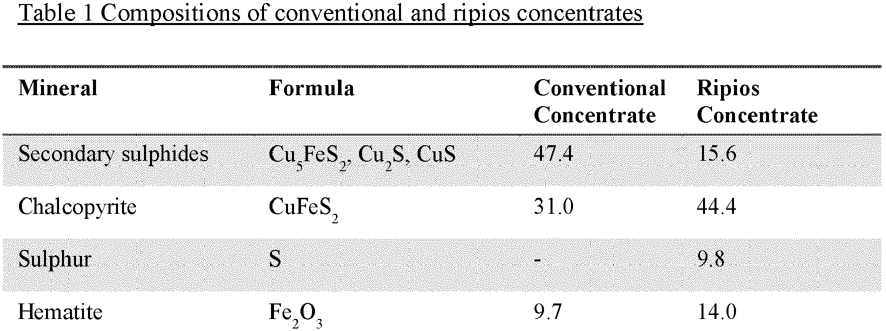

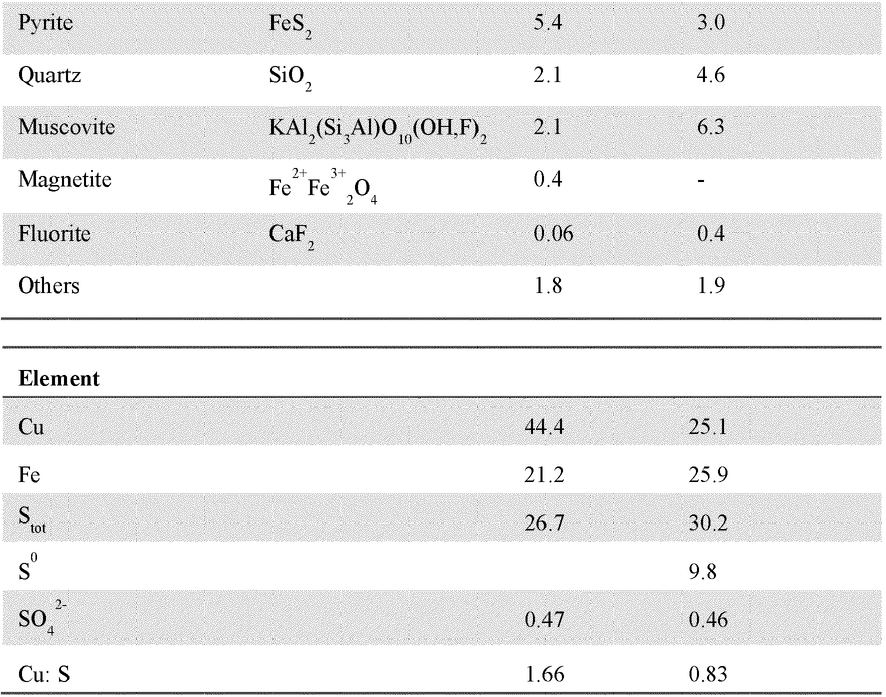

Three smelting tests were conducted using the conventional and/or ripios concentrates, and the results of those tests are set out in Table 2. The smelting tests were conducted in a primary matte smelter, comprising a flash smelter.

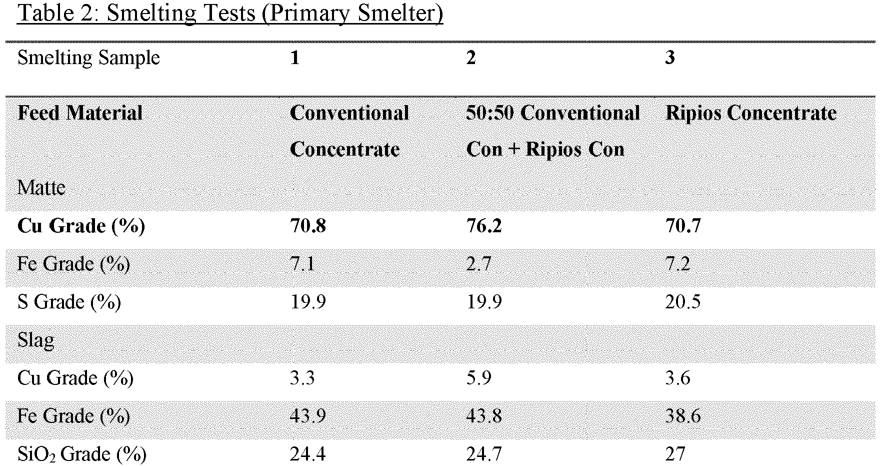

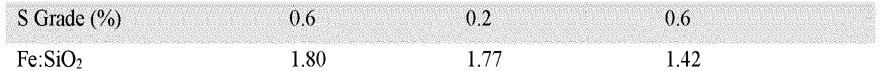

Each of the tests in Table 2 produced high grade copper matte, ie in excess of 70%.

The matte produced from the primary smelter was granulated and fed to a secondary smelter for conversion to blister copper. The secondary smelter in this case was a "Hybrid" DBF. While conventionally a DBF would only treat concentrate, in the present process, the furnace treats a combination of both matte and concentrate products simultaneously, thereby avoiding the need for a converting furnace to treat the matte alone. Table 3 shows the results of three smelting tests in the Hybrid DBF with different feed materials. In Sample 4, the feed material comprised a combination of conventional matte (produced according to Sample 1) and ripios matte (produced according to Sample 3). The feed material for Sample 5 was conventional concentrate (see Table 1) and conventional matte (produced according to Sample 1). The feed material for Sample 6 was conventional concentrate (see Table 1) and conventional/ripios matte (produced according to Sample 2). In each Sample, the resulting blister copper exhibited a grade of >99% copper, and contained low sulphur and controlled Fe:SiO₂, indicating that high quality blister can be produced according to the present process.

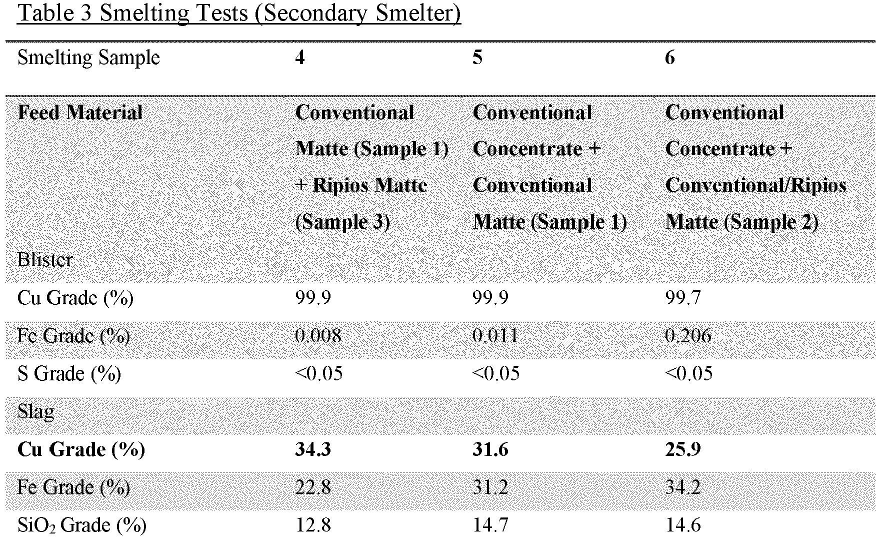

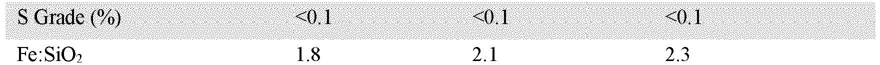

## Claims

1. A process for recovering copper, uranium and one or more precious metals from an ore material, including:
a. forming a heap of the ore material;
b. subjecting the heap of the ore material to an acidic heap leach using an iron containing acidic leach solution in the presence of an oxygen containing gas, and producing a pregnant leach solution and a ripios;
c. subjecting the ripios to flotation to produce a copper containing ripios concentrate and tailings; and
d. subjecting the ripios concentrate to a smelting process to produce a smelted copper product.
e. recovering copper and uranium from the pregnant leach solution.

2. The process of claim 1, further including the steps:
f. electro-refining the smelted copper product to produce cathode copper and precious metal- containing anode slimes; and
g. recovering the one or more precious metals from the slimes.

3. The process of claim 1, wherein the ore material contains copper sulphides and uranium minerals.

4. The process of any preceding claim, wherein the smelting process includes at least a primary smelting stage, preferably conducted in a matte smelting furnace, and a secondary smelting stage, preferably conducted in a direct to blister furnace.

5. The process of any preceding claim, wherein the ore material also contains one or more iron containing minerals which partly or wholly comprise the source of the iron in the iron containing acidic leach solution.

6. The process of claim 5, wherein the one or more iron containing minerals include gangue minerals, preferably comprising one or more of hematite, siderite and chlorite.

7. The process of any preceding claim, wherein the oxygen containing gas is air or oxygen enriched air.

8. The process of any preceding claim, wherein the pregnant leach solution contains copper and uranium.

9. The process of any preceding claim, wherein the iron containing acidic leach solution contains ferric ions which oxidise the ore material to dissolve copper and uranium, resulting in reduction to ferrous ions which are reoxidised to ferric ions by reaction with the oxygen containing gas.

10. The process of any preceding claim, wherein the acidic heap leach is conducted in more than one stage.

11. The process of any preceding claim, wherein the ripios is milled prior to flotation in step (c).

12. The process of any preceding claim, wherein the ripios concentrate comprises copper containing sulphides, uranium minerals and one or more precious metals,wherein the precious metal is preferably gold and/or silver.

13. The process of any preceding claim, wherein the smelting process includes at least two smelting stages and the ripios concentrate has a ratio of Cu:S below 1.4, the process including:
(a) smelting the ripios concentrate in a first stage comprising a matte smelter to produce a matte copper product containing at least 40% copper;
(b) combining the matte copper product with a copper concentrate to produce a feed material having a ratio of Cu:S that is higher than that of the ripios concentrate; and
(c) smelting the feed material in a second stage comprising a direct to blister furnace to produce blister copper having at least 95% copper.

14. An integrated plant for use in the process for recovering copper, uranium and one or more precious metals from an ore material as defined in claim 1, said plant including:
means for forming a heap of the ore material;
means for supplying an acidic leach solution and an oxygen containing gas to the heap to form a pregnant leach solution and a ripios;
extraction equipment for extracting copper and uranium from the pregnant leach solution;
means for collecting and transferring the pregnant leach solution arising from the heap leach to the extraction equipment;
flotation equipment for use in flotation of the ripios to produce a copper concentrate and means to transfer the ripios from the heap to the flotation equipment; and
one or more furnaces for smelting the copper concentrate to produce a smelted copper product and means to transfer the copper concentrate to the one or more furnaces.

15. The plant of claim 14, further including electro-refining equipment for electrolytically processing the smelted copper product to produce cathode copper.

16. The plant of claim 15, wherein one or more furnaces for smelting the copper concentrate to produce a smelted copper product comprises a matte smelter for smelting the first copper concentrate in a first stage and direct to blister furnace for smelting the feed material in a second stage.

## Patentansprüche

1. Verfahren zum Rückgewinnen von Kupfer, Uran und ein oder mehr Edelmetallen aus einem Erzmaterial, enthaltend:
a. Bilden eines Haufens des Erzmaterials;
b. Unterwerfen des Haufens des Erzmaterials einer sauren Haufenlaugung unter Verwendung einer eisenhaltigen sauren Laugenlösung in Gegenwart eines sauerstoffhaltigen Gases, und Erzeugen einer trächtigen Laugenlösung und eines Ripios;
c. Unterziehen des Ripios einer Flotation, um ein kupferhaltiges Ripioskonzentrat und Tailings zu erzeugen; und
d. Unterziehen des Ripioskonzentrats einem Schmelzprozess, um ein geschmolzenes Kupferprodukt zu erzeugen.
e. Rückgewinnen von Kupfer und Uran aus der trächtigen Laugenlösung.

2. Verfahren nach Anspruch 1, ferner enthaltend die Schritte:
f. Elektroraffinieren des geschmolzenen Kupferprodukts, um Kathodenkupfer und edelmetallhaltige Anodenschleime zu erzeugen; und
g. Rückgewinnen der ein oder mehr Edelmetalle aus den Schleimen.

3. Verfahren nach Anspruch 1, bei welchem das Erzmaterial Kupfersulfide und Uranmineralien enthält.

4. Verfahren nach einem der vorhergehenden Ansprüche, bei welchem der Schmelzprozess zumindest eine primäre Schmelzstufe, die vorzugsweise in einem matten Schmelzofen durchgeführt wird, und eine sekundäre Schmelzstufe, die vorzugsweise in einem Direct-to-Blister-Ofen durchgeführt wird, enthält.

5. Verfahren nach einem der vorhergehenden Ansprüche, bei welchem das Erzmaterial auch ein oder mehr eisenhaltige Mineralien enthält, die teilweise oder vollständig die Quelle des Eisens in der eisenhaltigen sauren Laugenlösung aufweisen.

6. Verfahren nach Anspruch 5, bei welchem die ein oder mehr eisenhaltigen Mineralien Gangmineralien enthalten, die vorzugsweise ein oder mehr von Hämatit, Siderit und Chlorit aufweisen.

7. Verfahren nach einem der vorhergehenden Ansprüche, bei welchem das sauerstoffhaltige Gas Luft oder mit Sauerstoff angereicherte Luft ist.

8. Verfahren nach einem der vorhergehenden Ansprüche, bei welchem die trächtige Laugenlösung Kupfer und Uran enthält.

9. Verfahren nach einem der vorhergehenden Ansprüche, bei welchem die eisenhaltige saure Laugenlösung Eisen(III)-Ionen enthält, die das Erzmaterial oxidieren, um Kupfer und Uran aufzulösen, was zu einer Reduktion zu Eisen(II)-Ionen führt, die durch Reaktion mit dem sauerstoffhaltigen Gas zu Eisen(III)-Ionen reoxidiert werden.

10. Verfahren nach einem der vorhergehenden Ansprüche, bei welchem die saure Haufenlaugung in mehr als einer Stufe durchgeführt wird.

11. Verfahren nach einem der vorhergehenden Ansprüche, bei welchem das Ripios vor der Flotation in Schritt (c.) gemahlen wird.

12. Verfahren nach einem der vorhergehenden Ansprüche, bei welchem das RipiosKonzentrat kupferhaltige Sulfide, Uranmineralien und ein oder mehr Edelmetalle aufweist, wobei das Edelmetall vorzugsweise Gold und/oder Silber ist.

13. Verfahren nach einem der vorhergehenden Ansprüche, bei welchem der Schmelzprozess wenigstens zwei Schmelzstufen enthält und das RipiosKonzentrat ein Cu:S-Verhältnis unter 1,4 hat, wobei das Verfahren enthält:
(a) Schmelzen des Ripios-Konzentrats in einer ersten Stufe, die einen matten Schmelzer aufweist, um ein mattes Kupferprodukt mit wenigstens 40% Kupfer zu erzeugen;
(b) Kombinieren des matten Kupferprodukts mit einem Kupferkonzentrat, um ein Ausgangsmaterial mit einem Cu:S-Verhältnis, das höher ist als jenes des Ripios-Konzentrats, zu erzeugen; und
(c) Schmelzen des Ausgangsmaterials in einer zweiten Stufe, die einen Direct-to-Blister-Ofen aufweist, um Blisterkupfer mit wenigstens 95% Kupfer zu erzeugen.

14. Integrierte Anlage zur Verwendung im Verfahren zum Rückgewinnen von Kupfer, Uran und ein oder mehr Edelmetallen aus einem Erzmaterial nach Anspruch 1, wobei die Anlage enthält:
Mittel zum Bilden eines Haufens des Erzmaterials;
Mittel zum Zuführen einer sauren Laugenlösung und eines sauerstoffhaltigen Gases zum Haufen, um eine trächtige Laugenlösung und ein Ripios zu bilden;
Extraktionsvorrichtung zum Extrahieren von Kupfer und Uran aus der trächtigen Laugenlösung;
Mittel zum Sammeln und Übertragen der trächtigen Laugenlösung, die aus der Haufenlauge entsteht, zur Extraktionsvorrichtung;
Flotationsvorrichtung zur Verwendung bei der Flotation des Ripios, um ein Kupferkonzentrat zu erzeugen, und Mittel, um das Ripios vom Haufen zur Flotationsvorrichtung zu übertragen; und
ein oder mehr Öfen zum Schmelzen des Kupferkonzentrats, um ein geschmolzenes Kupferprodukt zu erzeugen, und Mittel, um das Kupferkonzentrat zu den ein oder mehr Öfen zu übertragen.

15. Anlage nach Anspruch 14, ferner enthaltend eine Elektroraffiniervorrichtung zum elektrolytischen Verarbeiten des geschmolzenen Kupferprodukts, um Kathodenkupfer zu erzeugen.

16. Anlage nach Anspruch 15, bei welcher ein oder mehr Öfen zum Schmelzen des Kupferkonzentrats, um ein geschmolzenes Kupferprodukt zu erzeugen, einen matten Schmelzer zum Schmelzen des ersten Kupferkonzentrats in einer ersten Stufe und einen Direct-to-Blister-Ofen zum Schmelzen des Ausgangsmaterials in einer zweiten Stufe aufweisen.

## Revendications

1. Procédé de récupération du cuivre, de l'uranium et d'un ou de plusieurs métaux précieux à partir d'un matériau de minerai, consistant à :
a. former un tas du matériau de minerai ;
b. soumettre le tas du matériau de minerai à une lixiviation acide en tas à l'aide d'une solution de lixiviation acide contenant du fer et en présence d'un gaz contenant de l'oxygène, et produire une solution de lixiviation enrichie et un résidu de minerai (ripios) ;
c. soumettre le résidu de minerai à une flottation pour produire un concentré de résidu contenant du cuivre et des rejets ;
d. soumettre le concentré de résidu de minerai à un procédé de fusion pour produire un produit de cuivre fondu ; et
e. récupérer du cuivre et de l'uranium à partir de la solution de lixiviation enrichie.

2. Procédé selon la revendication 1, comprenant en outre les étapes de :
f. électro-raffiner le produit de cuivre fondu pour produire du cuivre cathodique et des boues anodiques contenant du métal précieux ; et
g. récupérer lesdits un ou plusieurs métaux précieux à partir des boues.

3. Procédé selon la revendication 1, dans lequel le matériau de minerai contient des sulfures de cuivre et des minerais d'uranium.

4. Procédé selon l'une quelconque des revendications précédentes, dans lequel le procédé de fusion inclut au moins une étape de fusion primaire, conduite de préférence dans un four de fusion de matte, et une étape de fusion secondaire, conduite de préférence dans un four de direct à blister.

5. Procédé selon l'une quelconque des revendications précédentes, dans lequel le matériau de minerai contient également un ou plusieurs minéraux contenant du fer qui constituent en partie ou en totalité la source du fer dans la solution de lixiviation acide contenant du fer.

6. Procédé selon la revendication 5, dans lequel lesdits un ou plusieurs minéraux contenant du fer incluent des minéraux de gangue, comprenant de préférence un ou plusieurs parmi l'hématite, la sidérite et la chlorite.

7. Procédé selon l'une quelconque des revendications précédentes, dans lequel le gaz contenant de l'oxygène est de l'air ou de l'air enrichi en oxygène.

8. Procédé selon l'une quelconque des revendications précédentes, dans lequel la solution de lixiviation enrichie contient du cuivre et de l'uranium.

9. Procédé selon l'une quelconque des revendications précédentes, dans lequel la solution de lixiviation acide contenant du fer contient des ions ferriques qui oxydent le matériau de minerai pour dissoudre le cuivre et l'uranium, entraînant une réduction en ions ferreux qui sont réoxydés en ions ferriques par réaction avec le gaz contenant de l'oxygène.

10. Procédé selon l'une quelconque des revendications précédentes, dans lequel la lixiviation acide en tas est effectuée en plus d'une étape.

11. Procédé selon l'une quelconque des revendications précédentes, dans lequel le résidu de minerai est broyé avant la flottation à l'étape (c).

12. Procédé selon l'une quelconque des revendications précédentes, dans lequel le concentré de résidu de minerai comprend des sulfures contenant du cuivre, des minéraux d'uranium et un ou plusieurs métaux précieux, dans lequel le métal précieux est de préférence l'or et / ou l'argent.

13. Procédé selon l'une quelconque des revendications précédentes, dans lequel le procédé de fusion inclut au moins deux étapes de fusion et le concentré de résidu de minerai a un rapport Cu:S inférieur à 1,4, le procédé consistant à :
(a) fondre le concentré de résidu de minerai dans une première étape comprenant une fonderie de matte pour produire un produit de cuivre de matte contenant au moins 40 % de cuivre ;
(b) combiner le produit de cuivre de matte avec un concentré de cuivre pour produire un matière première ayant un rapport Cu:S qui est supérieur à celui du concentré de résidu de minerai ; et
(c) fondre la matière première dans une deuxième étape comprenant un four de direct à blister pour produire du cuivre blister ayant au moins 95 % de cuivre.

14. Installation intégrée destinée à être utilisée dans un procédé de récupération de cuivre, d'uranium et d'un ou plusieurs métaux précieux à partir d'un matériau de minerai selon la revendication 1, ladite installation incluant :
des moyens pour former un tas du matériau de minerai ;
des moyens pour fournir au tas une solution de lixiviation acide et un gaz contenant de l'oxygène afin de former une solution de lixiviation enrichie et un résidu de minerai (ripios) ;
un équipement d'extraction pour extraire du cuivre et de l'uranium de la solution de lixiviation enrichie ;
des moyens pour collecter et transférer la solution de lixiviation enrichie provenant de la lixiviation en tas vers l'équipement d'extraction ;
un équipement de flottation destiné à être utilisé pour la flottation du résidu de minerai afin de produire un concentré de cuivre, et des moyens de transférer le résidu de minerai du tas vers l'équipement de flottation ; et
un ou plusieurs fours destinés à la fusion du concentré de cuivre pour produire un produit de cuivre fondu, et des moyens pour transférer le concentré de cuivre vers lesdits un ou
plusieurs fours.

15. Installation selon la revendication 14, comprenant en outre un équipement d'électroraffinage destiné au traitement électrolytique du produit de cuivre fondu pour produire du cuivre cathodique.

16. Installation selon la revendication 15, dans laquelle un ou plusieurs fours destinés à la fusion du concentré de cuivre pour produire un produit de cuivre fondu comprennent une fonderie de matte destinée à fondre le premier concentré de cuivre dans une première étape, et un four de direct à blister pour fondre la matière première dans une deuxième étape.
